Europäisches Patentamt

European Patent Office

Office européen des brevets

(19)

(11) EP 0 522 181 B1

(12) # EUROPEAN PATENT SPECIFICATION

(45) Date of publication and mention
of the grant of the patent:
**08.10.1997 Bulletin 1997/41**

(21) Application number: **92904237.2**

(22) Date of filing: **29.01.1992**

(51) Int Cl.⁶: **G09G 5/18**

(86) International application number:
**PCT/JP92/00081**

(87) International publication number:
**WO 92/13332 (06.08.1992 Gazette 1992/21)**

(54) **APPARATUS FOR PROCESSING A SIGNAL**

SIGNALVERARBEITUNGSANLAGE

APPAREIL DE TRAITEMENT D'UN SIGNAL

(84) Designated Contracting States:
**DE FR GB**

(30) Priority: **29.01.1991 JP 8967/91**

(43) Date of publication of application:
**13.01.1993 Bulletin 1993/02**

(73) Proprietor: **SEIKO EPSON CORPORATION
Shinjuku-ku Tokyo 163-08 (JP)**

(72) Inventor: **TAKEUCHI, Kesatoshi
Suwa-chi Nagano 392 (JP)**

(74) Representative: **Burke, Steven David et al
R.G.C. Jenkins & Co.
26 Caxton Street
London SW1H 0RJ (GB)**

(56) References cited:
DE-A- 3 231 208          JP-A-61 053 880
JP-A-61 248 082          JP-A-62 136 174
US-A- 5 068 731

• IBM TECHNICAL DISCLOSURE BULLETIN,
vol.29, no.11, April 1987, NEW YORK US pages
4859 - 4860 'Programmable dot clock for video
adapter.'

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

## Description

The invention relates to an apparatus for processing a signal. More specifically the invention relates to an apparatus for processing a signal including a video signal representing an image, a horizontal synchronizing signal (HS) defining a horizontal clocking period and a vertical synchronizing signal (VS) defining a vertical clocking period. The apparatus can be used for enlarging or contracting an image in a vertical direction.

In the invention, an approach is employed as the premise to once write a luminance signal in a composite video signal CS into a video memory as video data thereafter to read out the video data for a second time to display it on a monitor. On this premise, by carrying out an address control in a write/read operation of video data with respect to the video memory, expansion/contraction in a vertical direction of an image is attained.

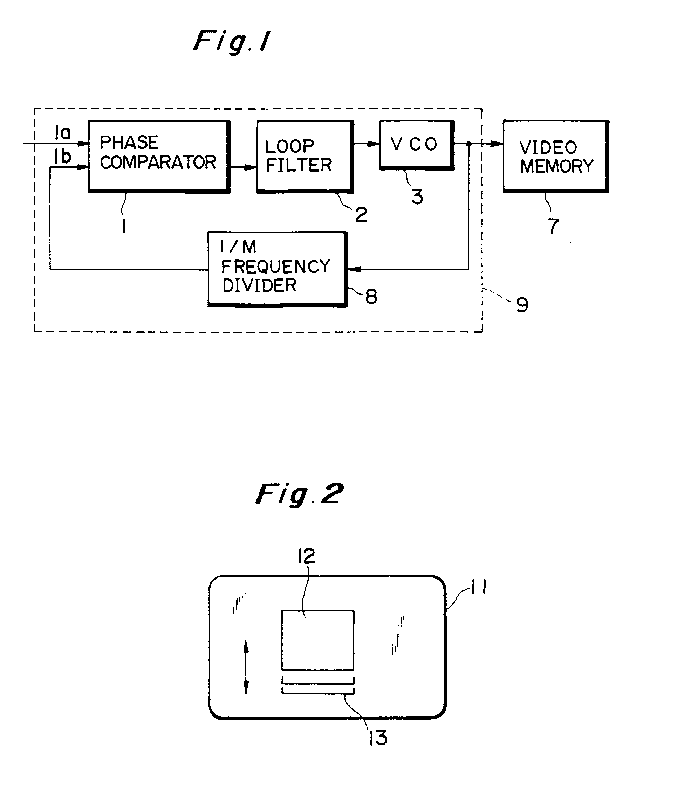

FIG. 1 is a block diagram showing a conventional video processor. A PLL (Phase Locked Loop) circuit 9 is a circuit adapted for generating a line clock signal for incrementing an address in a vertical direction of a video memory 7. To a reference input terminal 1(a) of a phase comparator 1 in the PLL circuit 9, a vertical synchronizing signal separated and extracted from a composite video signal CS is inputted. A signal outputted from the phase comparator 1 is applied to a VCO (Voltage Controlled Oscillator) 3 through a loop filter 2. The VCO 3 generates a clock signal having a frequency corresponding to its input signal voltage. This clock signal is used as a vertical line clock signal for video memory 7. This clock signal outputted from VCO3 is frequency-divided by M at a frequency divider 8. The frequency-divided signal thus obtained is fed back to a phase comparison input terminal 1(b) of the phase comparator 1. By employing such a configuration, a line clock signal CK having a period Tx synchronous in phase with the vertical synchronizing signal is obtained (It is to be noted that the period Tx is expressed as Tx = Tv/M; Tv is a period of the vertical synchronizing signal).

In the above-described conventional video processor, by allowing the frequency-dividing ratio M value of the frequency divider 8 to have several tens to several thousands of lock ranges (upper limit/lower limit frequency variable widths of a frequency in a lock state), expansion (enlargement) or contraction in a vertical direction is realized. However, generally, in the case where a PLL circuit is used, it is stable minimum range to set the width of lock ranges in which ratio of maximum range is about ten. Further, in accordance with a present technical level, it is expected that the lock range is allowed to be as narrow as possible to thereby construct a stable PLL circuit.

FIG. 2 is a view showing an image fluctuation phenomenon in the conventional processor shown in FIG. 1. An image display area 12 is displayed within a monitor 11. There is shown an image fluctuation state 13 in a vertical direction occurring in the case where the lower portion of the image display area 12 is expanded (enlarged) or contracted in a vertical direction.

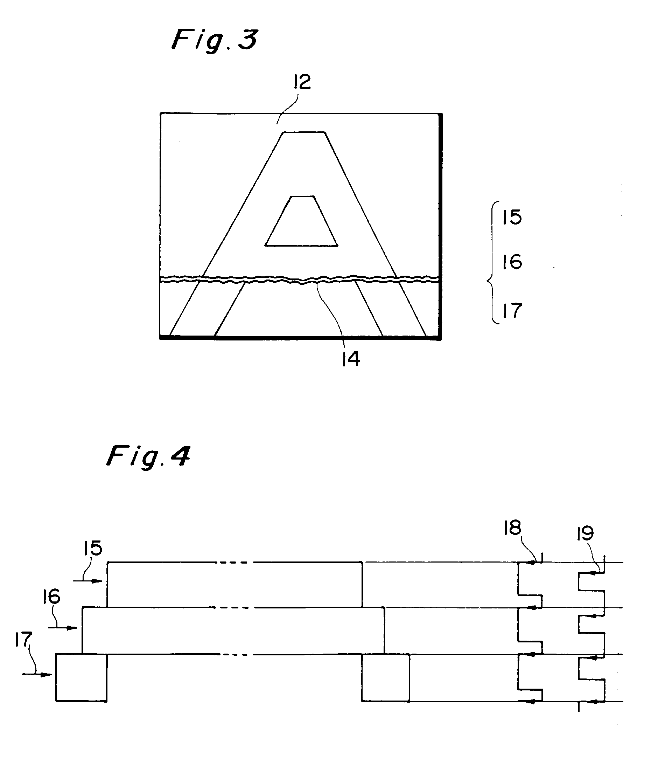

FIG. 3 is a view similarly showing an image flicker phenomenon in the same conventional processor. Because of a jitter due to a phase fluctuation (frequency noise superimposed on a fixed frequency) of a line clock signal applied to the video memory 7, there takes place a line jumping phenomenon in a vertical direction with respect to the video memory 7. As a result, an image flicker 14 in the form of a lateral line appears on a monitor.

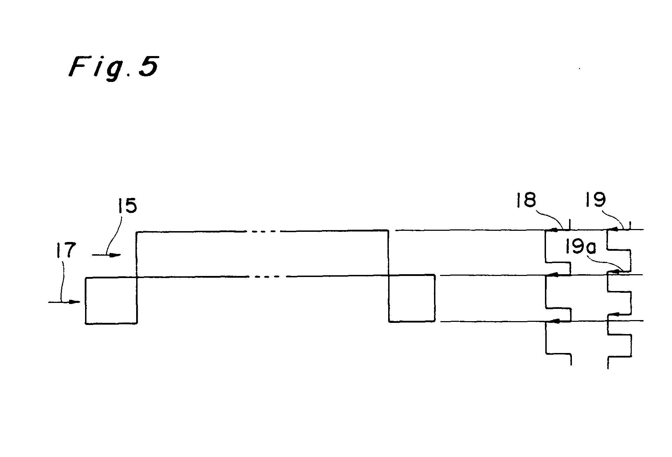

FIGS. 4 and 5 are views showing the relationship between line data in the video memory and a horizontal synchronizing signal or a line clock signal, respectively. The arrow of the line clock signal 19 indicates a timing of increment of a vertical address of the video memory 7, and the arrow of the horizontal synchronizing signal 18 shows a timing for establishing a vertical address (line position) incremented by the line clock 19. Here, explanation will be given on the assumption that lines 15, 16 and 17 are outputted from the video memory 7. In FIG. 4, the vertical address is incremented by one line at a timing indicated by the arrow of the line clock 19 after the arrow of the horizontal synchronizing signal 18, and that address is established at a timing indicated by the arrow of a next horizontal synchronizing signal 18. For this reason, lines 15, 16 and 17 are displayed in sequence. However, in FIG. 5, between the first arrow and the second arrow of the horizontal synchronizing signal 18, the arrow of the line clock signal 19 is inserted twice. Accordingly, before establishment of a vertical address by the second arrow of the horizontal synchronizing signal 18, increment of the vertical address is carried out twice. For this reason, line 17 might be read out at a timing where readout of the line 16 shown in FIG. 4 should be originally carried out, resulting in omission of display of the line 16. As stated above, when there exists a jitter on the line clock signal 19, the state of FIG. 4 and the state of FIG. 5 are repeatedly displayed. Thus, an image flicker 14 as shown in FIG. 3 would take place.

In this conventional processor, a vertical synchronizing signal of a low frequency of several tens Hertz (Hz) is used for the reference input terminal 1(a) of the PLL circuit 9. Further, the set width of the frequency dividing value M of the frequency divider 8 is generally set to several tens to several thousands, thus to allow the lock range of the frequency divider 8 to be broad. For this reason, the design for constants of the loop filter 2 is not easy, and a large jitter appears on a line clock signal. As a result, there take place portions where jump of the vertical address with respect to the video memory is conducted and portions where no jump is conducted, leading to an unseemly picture as an image flicker phenomenon in the form of a lateral line. It is generally difficult to precisely calculate a value of jitter because of various complicated conditions. Accordingly, when an actual measurement of jitter is conducted, a value of 5 to 10 [$\mu$S] was observed.

Further, every time alteration of the frequency dividing ratio M value for carrying out an expansion (enlargement) operation or a contraction operation of an image is made, expansion/contraction are repeated in a vertical direction by vibration based on a dumping factor $\zeta$ of the PLL circuit 9. Namely, for an acquisition time (time until a frequency difference is locked) of the PLL circuit 9, there results an unseemly picture as an image fluctuation phenomenon in a vertical direction.

Equations for calculating an acquisition time causing an image fluctuation phenomenon in a vertical direction are shown below.

When a control voltage width of VCO 3 is assumed as Vd [V], a gain constant $K\Phi$ of the phase comparator 1 is expressed as follows:

$$K\Phi = (Vd/2)/2\pi \ [V/rad] \qquad (1)$$

When an output frequency width of the VCO 3 is assumed as Fd [Hz], a conversion gain KV of the VCO 3 is expressed as follows:

$$KV = Fd\cdot2\pi/Vd \ [rad/V\cdot s] \qquad (2)$$

A loop gain K is expressed as follows:

$$K = K\Phi\cdot KV \qquad (3)$$

In the case of an active filter, when $\tau1 = C\cdot R1$, SQRT = SQUARE ROOT ($\sqrt{}$), a natural angular frequency $\omega n$ is expressed as follows:

$$\omega n = SQRT \ (K/\tau1) \qquad (4)$$

On the other hand, in the case where a general condition of $\zeta = 0.7$ is selected, $\omega n\cdot t$ becomes equal to about 4.5. Accordingly, the natural angular frequency $\omega n$ when the acquisition time is designated at $\underline{t}$ is expressed as follows:

$$\omega n = 4.5/t \qquad (5)$$

When substitution of Eq.(5) into Eq.(4) is made, the acquisition time $\underline{t}$ is expressed as follows:

$$t = SQRT \ (20.\tau1/K) \qquad (6)$$

It is seen that the acquisition time $\underline{t}$ is directly affected by the loop gain K. Accordingly, in the case where Vd in the loop gain K is assumed to be fixed, the acquisition time $\underline{t}$ is greatly affected by the output frequency width Fd of the VCO 3.

The above discussed apparatus is described in greater detail in WO-A-90/00789.

The invention aims to allow jitter in a PLL circuit and an acquisition time in the PLL circuit to be as minimum as possible, thus to eliminate an image flicker or an image fluctuation phenomenon.

According to the invention there is provided an apparatus for processing a signal including a video signal representing an image, a horizontal synchronizing signal defining a horizontal clocking period and a vertical synchronizing signal defining a vertical clocking period, the apparatus comprising: a video memory comprising a multiplicity of storage locations for storing the video signal; and a phase-locked loop circuit connected to receive the horizontal synchronizing signal and to generate therefrom a clocking signal defining a clocking period equal to the horizontal clocking period divided by a first predetermined value, said PLL circuit being connectable to external equipment to permit the value to be changed on command therefrom; and a frequency divider connected to receive said clocking signal from said PLL circuit and to divide the clocking signal frequency by a second predetermined value so as to generate a line-clocking signal defining a line-clocking period, the frequency divider being connectable to external equipment to enable the second predetermined value to be changed on command therefrom, the second predetermined value being in use selected to equal the number of horizontal clocking periods in a vertical clocking period, and in that said video memory is connected to receive the line-clocking signal and to output the video signal in response thereto, the apparatus thereby being arranged for performing a vertical enlargement or contraction by a factor equal to the first predetermined value of the image as represented by the video signal output from the video memory.

Since a horizontal synchronizing signal having a high frequency is used as an input signal of the PLL circuit in place of a vertical synchronizing signal of a video signal, it is possible to allow both jitter and acquisition time $\underline{t}$ in the PLL circuit to become small. For this reason, even in the case of changing the frequency dividing value N1 of the internal frequency divider within the PLL circuit to change the frequency of a line clock signal applied to the video memory to thereby carry out expansion (enlargement) or contraction of an image, image flicker and/or image fluctuation phenomena are difficult to occur.

The above and further features of the invention are set forth with particularity in the appended claims and together with advantages thereof will become clearer from consideration of the following detailed description of an exemplary embodiment of the invention given with reference to the accompanying drawings.

In the drawings:

FIG. 1 is a block diagram showing a conventional video processor;

FIG. 2 is a view showing an image fluctuation phenomenon by the convention processor of FIG. 1;

FIG. 3 is a view showing an image flicker phenomenon by the conventional processor of FIG. 1;

FIGS. 4 and 5 are views showing the relationship between line data in the video memory and a horizontal synchronizing signal or a line clock in the conventional processor, respectively;

FIG. 6 is a block diagram showing a video processor which is an embodiment of this invention.

FIGs. 7A, 7B and 7C are timing charts showing the operation of this embodiment, respectively.

FIGs. 8A and 8B are respectively views for explaining expansion and contraction of an image.

Carrying Out the Invention

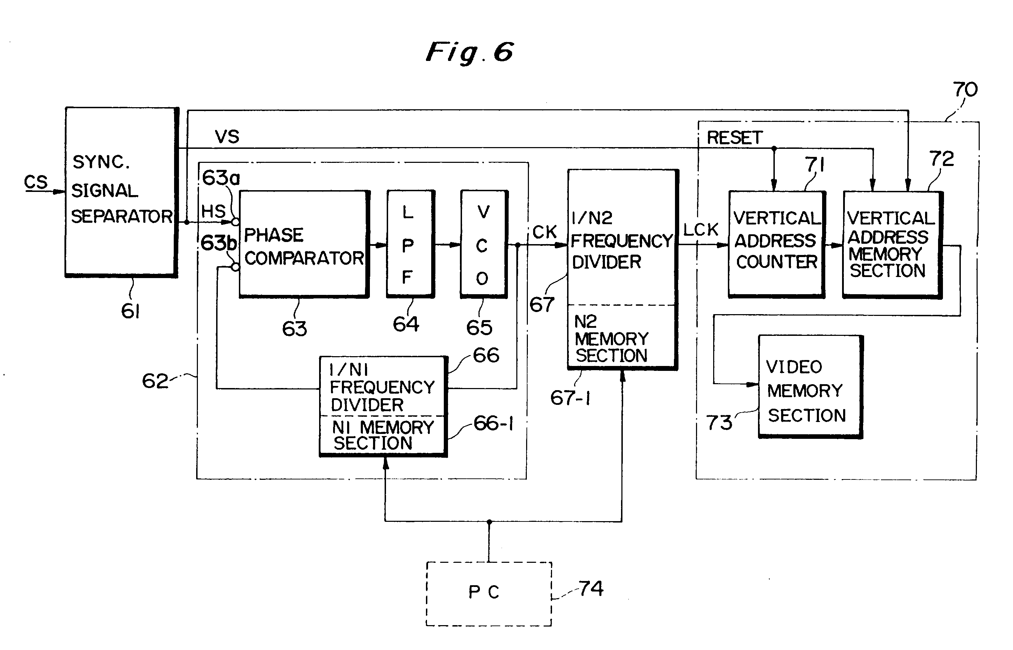

In FIG. 6, a synchronizing signal separator 61 is a circuit adapted for separating a vertical synchronizing signal VS and a horizontal synchronizing signal HS from a composite video signal CS. A PLL circuit 62 is comprised of a phase comparator 63, a low-pass filter (LPF) 64 serving as a loop filter, a voltage controlled oscillator (VCO) 65, and a frequency divider 66. To a reference input terminal 63a of the phase comparator 63, the horizontal synchronizing signal HS from the synchronizing signal separator 61 is inputted. Further, to a phase comparison input terminal 63b, a signal from the frequency divider 66 is inputted. An output signal of the phase comparator 63 is inputted to the voltage controlled oscillator 65 through the low-pass filter 64. The voltage controlled oscillator 65 outputs a clock signal CK having a frequency corresponding to an input voltage. This clock signal CK serves as an output signal of the PLL circuit 62, and is also delivered to the internal frequency divider 66, at which it is frequency-divided by N1. The frequency divided signal thus obtained is fed back to the phase comparator 63. The frequency divider 66 comprises an N1 memory section 66-1 for storing a frequency dividing value N1. The value of the frequency dividing value N1 can be arbitrarily set by changing the content of the N1 memory section 66-1 by a command from an external device such as a personal computer 74, etc.

A frequency divider 67 is a circuit for frequency-dividing an output signal of the PLL circuit by N2. This frequency divider 67 also comprises an N2 memory section 67-1 for storing a frequency dividing value N2 similarly to the frequency divider 66.

A video memory 70 comprises a vertical address counter 71, a vertical address memory section 72, and a video memory section 73. The video memory section 73 serves to store a luminance signal in a composite video signal CS as digital data. Here, a VRAM (Video Random Access Memory) is used. The vertical address counter 71 is a counter for counting signal (this signal will be referred to as a line clock signal LCK hereinafter) from the frequency divider 67. This counter 71 is reset by the vertical synchronizing signal VS from the synchronizing signal separator 61. The vertical address memory section 72 inputs a count value outputted from the vertical address counter 71 to hold its count value at an input timing of the horizontal synchronizing signal HS from the horizontal signal separator 61. An output value of the vertical address memory section 72 serves as a vertical address signal with respect to the video memory section 73.

The operation of the video processing circuit thus constructed will now be described.

First, a composite video signal CS is inputted to the synchronizing signal separator 61. A horizontal synchronizing signal HS subjected to synchronous separating processing at this circuit is inputted to the reference input terminal 63a of the phase comparator 63 within the PLL circuit 62. At this time, a vertical synchronizing signal VS similarly separated at the synchronizing signal separator 61 resets the vertical address counter 71 and the vertical address memory section 72 within the video memory 70.

In the PLL circuit 62, a clock signal CK outputted from the voltage controlled oscillator 65 is inputted to the frequency divider 66. The frequency divider 66 allows the internal counter to count up every time when a clock signal CK is inputted, and generates a carry output signal when its count value reaches N1 to deliver it to the phase comparison input terminal 63b of the phase comparator 63. The phase comparator 63 determines a phase difference between two input signals respectively inputted to the input terminals 63a and 63b to deliver that phase difference to the low-pass filter 64, at which it is converted to a corresponding voltage. At the voltage controlled oscillator 65, there changes the frequency of a clock signal CK outputted in dependency upon a converted voltage. Such a change is developed so that a phase difference between an input signal to the reference input terminal 63a and an input signal to the phase comparison input terminal 63b becomes minimum. When that phase difference becomes equal to zero, there results a stable state, i.e., a lock state. The clock signal CK outputted from the PLL circuit 62 which has been brought into a lock state in this way is frequency-divided by N2 at the frequency divider 67, resulting in a line clock signal LCK. This line clock signal LCK increments the vertical address counter 71 irrespective of the horizontal synchronizing signal HS. A count value of the vertical address counter 71 is delivered to the vertical address memory section 72 at all times. At this time, the vertical address memory section 72 holds that count value at a timing of the horizontal synchronizing signal HS to deliver it to the video memory section 73 as a vertical address signal. It is to be noted that the value of N2 is set to the number of horizontal synchronizing signals within one period of the vertical synchronizing signal VS.

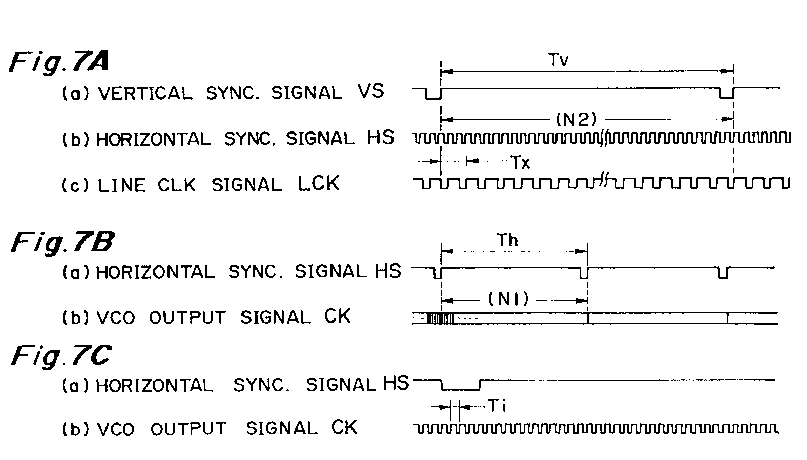

FIGS. 7A to 7C are timing charts for explaining the operation of this embodiment in more detail. In FIG. 7A, (a), (b) and (c) represents a vertical synchronizing signal VS, a horizontal synchronizing signal HS, and a line clock signal LCK, respectively. FIG. 7B shows a horizontal synchronizing signal HS expanded in time of FIG. 7A(b), and FIG. 7B(b) shows a VCO output signal (clock signal CK) corresponding thereto. FIGS. 7C(a) and (b) show signals further expanded of FIGS. 7B(a) and (b), respectively. When it is assumed that the period of the vertical synchronizing signal VS, i.e., the vertical synchronous period is Tv, the period of the horizontal synchronizing signal HS, i.e., the horizontal synchronous period is Th, the period of the line clock signal LCK is Tx, and the period of the VCO output signal CK is Ti, the period Ti of the VCO output signal CK is expressed as follows:

$$Ti = Th \times 1/N1 \qquad (7)$$

Transformation of the equation (7) gives

$$Th = Ti \times N1 \qquad (8)$$

Further, the period Tx of the line clock signal LCK is expressed as follows:

$$Tx = Ti \times N2 \qquad (9)$$

Meanwhile, since the value of N2 is set to the number of horizontal synchronizing signals HS within one period of the vertical synchronizing signal VS, the following equation (10) holds

$$Tv = Th \times N2 \qquad (10)$$

Substitution of the equation (8) into the equation (10) gives

$$Tv = Ti \times N1 \times N2 \qquad (11)$$

After substitution of the equation (9) into the equation (11) is made, arrangement is made with respect Tx. As a result, the following equation (12) is provided.

$$Tx = Tv/N1 \qquad (12)$$

It is seen from the above equation (12) that the frequency dividing value M of the frequency divider in the PLL circuit of the conventional video processor using a vertical synchronizing signal VS as a reference input signal of the PLL circuit and the frequency dividing value N1 of the frequency divider 66 of this embodiment have the same meaning in respective of the relationship with the period of the line clock signal LCK. Namely, it is possible to vary the line clock signal LCK irrespective of the horizontal synchronizing signal HS. Thus, expansion (enlargement) or contraction of an image can be carried out.

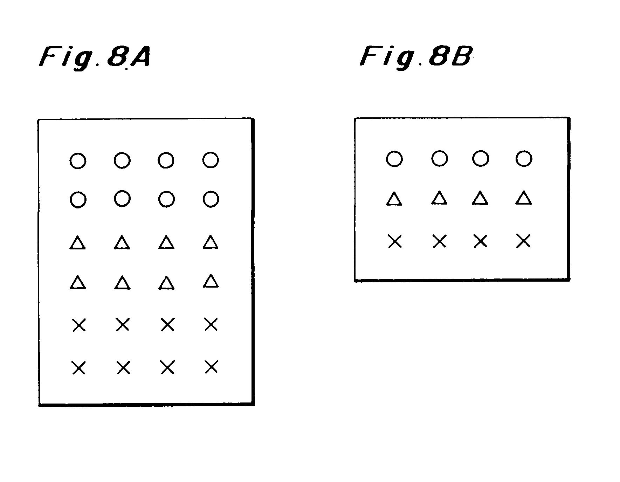

FIGs. 8A and 8B are respectively views for explaining expansion (enlargement) and contraction of an image. Explanation will be first given in connection with the case where data written in the video memory section 73 is read out. It is now assumed that FIG. 8A shows the content of video data of the video memory section 73. For example, when N1 is set so that the frequency of the line clock signal LCK becomes equal to a value twice greater than that of the horizontal synchronizing signal HS, video data in a vertical direction of the video memory section 73 is read out every other line. For this reason, as shown in FIG. 8B, video data thinned every line in a vertical direction is provided. Thus, an image contracted to one half in a vertical direction is provided.

On the other hand, in order to provide a twice enlarged image, when setting is made such that the frequency of the line clock signal LCK becomes equal to a value one half of that of the horizontal synchronizing signal HS, the same video data are provided in such a manner that they are adjacent in a vertical direction. Thus, an image enlarged twice in a vertical direction is provided. In this case, contrary to the above, FIG. 8B shows the content of video data of the video memory section 73 and FIG. 8A shows an image read out.

Further, in the case where FIG. 8A is assumed to show the content of a video signal to contract an image to one half in a vertical direction to write it into the video memory section 73, setting is made such that the frequency of the line clock signal LCK becomes equal to one half that of the horizontal synchronizing signal HS. By writing every other line video signal into the vertical address of the video memory section 73, video data in a vertical direction is thinned. As a result, video data is contracted to one half in a vertical direction. Thus, video data as shown in FIG. 8B will be written into the video memory section 73.

The frequency of the line clock signal LCK prescribing the resolution in a vertical direction of an image can be arbitrarily set by the N1 value stored in the memory section 66-1 as previously described. For this reason, an arbitrary enlargement/contraction in a vertical direction of an image can be carried out.

Industrial Applicability

In accordance with this invention, it is possible to arbitrarily carry out enlargement/ expansion of an image. In addition, since a horizontal synchronizing signal HS having a higher frequency as compared to vertical synchronizing signal VS is used as a reference input signal of the PLL circuit for preparing a line clock signal delivered to the video memory, the loop gain K of the PLL circuit can be increased. Accordingly, the acquisition time is reduced to a value of the order of 1/SQRT (several hundreds). As a result, an image fluctuation in a vertical direction at the time of enlargement/contraction in a vertical direction is difficult to occur. Further, even if the lock range is caused to be broad to the same degree as in the prior art, jitter is greatly reduced to such an extent that its actual measured value is 1 to 100 [nS]. Accordingly, an image flicker in the form of a lateral line by jitter can be eliminated.

Having thus described the present invention by reference to a preferred embodiment it is to be well understood that the embodiment in question is exemplary only and that modifications and variations such as will occur to those possessed of appropriate knowledge and skills may be made without departure from the scope of the invention as set forth in the appended claims.

## Claims

1. An apparatus for processing a signal including a video signal representing an image, a horizontal synchronizing signal (HS) defining a horizontal clocking period and a vertical synchronizing signal (VS) defining a vertical clocking period, the apparatus comprising:

   a video memory (70) comprising a multiplicity of storage locations for storing the video signal; and

   a phase-locked loop (PLL) circuit (62) connected to receive the horizontal synchronizing signal (HS) and to generate therefrom a clocking signal (CK) defining a clocking period equal to the horizontal clocking period divided by a first predetermined value (N1), said PLL circuit (62) being connectable to external equipment to permit the value (N1) to be changed on command therefrom; and

   a frequency divider (67) connected to receive said clocking signal (CK) from said PLL circuit (62) and to divide the clocking signal frequency by a second predetermined value (N2) so as to generate a line-clocking signal (LCK) defining a line-clocking period, the frequency divider being connectable to external equipment to enable the second predetermined value (N2) to be changed on command therefrom, the second predetermined value (N2) being in use selected to equal the number of horizontal clocking periods in a vertical clocking period, and

   in that said video memory (70) is connected to receive the line-clocking signal (LCK) and to output the video signal in response thereto, the apparatus thereby being arranged for performing a vertical enlargement or contraction by a factor equal to the first predetermined value (N1) of the image as represented by the video signal output from the video memory.

2. An apparatus as set forth in claim 1, wherein said PLL circuit (62) comprises internal frequency divider (66) having a memory section (66-1) for storing said first predetermined value (N1) as a frequency dividing value on command from external equipment.

3. An apparatus as set forth in claim 1 or 2, wherein said video memory (70) comprises a video memory section (73) for storing said video signal, a vertical address counter (71) connected to receive said line-clocking signal (LCK) from said frequency divider (67) for incrementing and outputting a vertical address value in response thereto, and a vertical address memory section (72) connected to receive said vertical address value together with said horizontal synchronizing signal (HS) in synchronism with said horizontal synchronizing signal as an address of said video memory section (73).

4. An apparatus as set forth in claim 1 or 2 or 3, wherein said frequency divider (67) comprises a memory section (67-1) for storing said second predetermined value (N2) as a frequency dividing value on command from external equipment.

5. An apparatus as set forth in any preceding claim, wherein the signal is a composite video signal (CS) and the apparatus further comprises a synchronising signal separator (61) for separating the horizontal and vertical synchronizing signals (HS, VS) from the video signal.

## Patentansprüche

1. Vorrichtung zum Verarbeiten eines Signals, das ein ein Bild darstellendes Videosignal, ein eine horizontale Taktperiode festlegendes horizontales Synchronisiersignal (HS) und ein eine vertikale Taktperiode festlegendes vertikales Synchronisiersignal (VS) enthält, mit

   einem Videospeicher (70), der eine Vielzahl von Speicherplätzen zum Speichern des Videosignals aufweist; und
   einer Phasenregelkreis (PLL)-Schaltung (62), die zum Empfangen des horizontalen Synchronisiersignals (HS) und zum Erzeugen eines Taktsignals (CK) aus dem horizontalen Synchronisiersignal, das eine Taktperiode gleich der horizontalen Taktperiode geteilt durch einen ersten vorbestimmten Wert (N1) festlegt, verbunden ist, wobei die PLL-Schaltung (62) an eine externe Einrichtung anschließbar ist, um auf deren Befehl hin ein Ändern des Wertes (N1) zu ermöglichen; und

einem Frequenzteiler (67), der zum Empfangen des Taktsignals (CK) von der PLL-Schaltung (62) und zum Teilen der Taktsignalfrequenz durch einen zweiten vorbestimmten Wert (N2) vorhanden ist, um so ein eine Zeilen-Taktperiode festlegendes Zeilen-Taktsignal (LCK) zu erzeugen, wobei der Frequenzteiler an eine externe Einrichtung anschließbar ist, um zu ermöglichen, daß der zweite vorbestimmte Wert (N2) auf deren Befehl hin geändert werden kann, wobei der verwendete zweite vorbestimmte Wert (N2) gleich der Zahl der horizontalen Taktperioden in einer vertikalen Taktperiode gewählt wird, und

wobei der Videospeicher (70) zum Empfangen des Zeilen-Taktsignals (LCK) und zum Ausgeben des Videosignals in Reaktion darauf verbunden ist, wodurch die Vorrichtung zum vertikalen Vergrößern oder Verkleinern des Bildes, das durch die Videosignalausgabe des Videospeichers dargestellt wird, um einem Faktor, der gleich dem ersten vorbestimmten Wert (N1) ist, ausgelegt ist.

2. Vorrichtung gemäß Anspruch 1, wobei die PLL-Schaltung (62) einen internen Frequenzteiler (66) mit einem Speicherbereich (66-1) zum Speichern des ersten vorbestimmten Wertes (N1) als Frequenzteilerwert auf Befehl der externen Einrichtung hin enthält.

3. Vorrichtung gemäß Anspruch 1 oder 2, wobei der Videospeicher (70) einen Videospeicherbereich (73) zum Speichern des Videosignals, einen vertikalen Adressenzähler (71), der zum Empfangen des Zeilen-Taktsignals (LCK) vom Frequenzteiler (67) zum Inkrementieren und Ausgeben eines vertikalen Adressenwertes in Reaktion darauf verbunden ist, und einen vertikalen Adressenspeicherbereich (72), der zum Empfangen des vertikalen Adressenwertes zusammen mit dem horizontalen Synchronisiersignal (HS) synchron mit diesen horizontalen Synchronisiersignal als eine Adresse des Videospeicherbereichs (73) verbunden ist.

4. Vorrichtung gemäß Anspruch 1 bis 3, wobei der Frequenzteiler (67) einen Speicherbereich (67-1) zum Speichern des zweiten vorbestimmten Wertes (N2) als einen Frequenzteilerwert auf Befehl der externen Einrichtung hin aufweist.

5. Vorrichtung gemäß einem der vorstehenden Ansprüche, wobei das Signal ein zusammengesetztes Videosignal (CS) ist und die Vorrichtung weiter einen Synchronisiersignal-Trenner (61) zum Trennen der horizontalen und vertikalen Synchronisiersignale (HS, VS) vom Videosignal aufweist.

## Revendications

1. Appareil servant à traiter un signal qui comprend un signal vidéo représentant une image, un signal (HS) de synchronisation horizontale qui définit une période de cadencement horizontal, et un signal (VS) de synchronisation verticale qui définit une période de cadencement vertical, l'appareil comprenant :

- une mémoire vidéo (70) contenant une multiplicité d'emplacements de mémorisation pour mémoriser le signal vidéo,
- un circuit (62) en boucle à phase asservie (PLL) connecté pour recevoir le signal (HS) de synchronisation horizontale et produire à partir de celui-ci un signal de cadencement (CK) définissant une période de cadencement égale à la période de cadencement horizontal divisée par une première valeur prédéterminée ($N_1$), ledit circuit PLL (62) pouvant être connecté à une installation externe pour permettre de changer la valeur ($N_1$) sur instruction de celle-ci, et
- un diviseur de fréquence (67) connecté pour recevoir ledit signal de cadencement (CK) dudit circuit PLL (62) et pour diviser la fréquence du signal de cadencement par une deuxième valeur prédéterminée ($N_2$) afin de produire un signal de cadencement de ligne (LCK) définissant une période de cadencement de ligne, le diviseur de fréquence pouvant être connecté à une installation externe pour permettre de changer la deuxième valeur prédéterminée ($N_2$) sur instruction de celle-ci,

la deuxième valeur prédéterminée ($N_2$) étant choisie en cours d'utilisation pour être égale au nombre de périodes de cadencement horizontal dans une période de cadencement vertical, et ladite mémoire vidéo (70) étant connectée pour recevoir le signal de cadencement de ligne (LCK) et pour émettre le signal vidéo en réponse à ce dernier, l'appareil étant ainsi conçu pour effectuer un agrandissement ou une réduction dans le sens vertical, par un facteur égal à la première valeur prédéterminée ($N_1$), de l'image telle que représentée par le signal vidéo délivré par la mémoire vidéo.

2. Appareil selon la revendication 1, dans lequel ledit circuit PLL (62) comprend un diviseur de fréquence interne (66) ayant une partie mémoire (66-1) pour mémoriser ladite première valeur prédéterminée ($N_1$) en tant que valeur de division de fréquence sur instruction provenant d'une installation externe.

3. Appareil selon la revendication 1 ou 2, dans lequel ladite mémoire vidéo (70) comprend une partie (73) formant mémoire vidéo pour mémoriser ledit signal vidéo, un compteur d'adresse verticale (71) connecté pour recevoir ledit signal de cadencement de ligne (LCK) en provenance dudit diviseur de fréquence (67) afin d'incrémenter et de délivrer une valeur d'adresse verticale en réponse à celui-ci, et une partie (72) formant mémoire d'adresse verticale, connectée pour recevoir ladite valeur d'adresse verticale en même temps que ledit signal de synchronisation horizontale (HS) en synchronisme avec ledit signal de synchronisation horizontale en tant qu'adresse de ladite partie (73) formant mémoire vidéo.

4. Appareil selon la revendication 1, 2 ou 3, dans lequel ledit diviseur de fréquence (67) comprend une partie mémoire (67-1) pour mémoriser ladite deuxième valeur prédéterminée ($N_2$) en tant que valeur de division de fréquence sur instruction provenant d'une installation externe.

5. Appareil selon l'une quelconque des précédentes revendications, dans lequel le signal est un signal vidéo composite (CS) et l'appareil comprend en outre un séparateur (61) de signaux de synchronisation pour séparer les signaux de synchronisation horizontale et verticale (HS, VS) du signal vidéo.

# Fig. 1

# Fig. 2

*Fig.3*

*Fig.4*

# Fig. 5

# Fig.6

SYNC. SIGNAL SEPARATOR — 61

CS →

VS

HS

63a

63b

PHASE COMPARATOR — 63

L P F — 64

V C O — 65

1/N1 FREQUENCY DIVIDER — 66

N1 MEMORY SECTION — 66-1

62

CK

1/N2 FREQUENCY DIVIDER — 67

N2 MEMORY SECTION — 67-1

LCK

RESET

70

VERTICAL ADDRESS COUNTER — 71

VERTICAL ADDRESS MEMORY SECTION — 72

VIDEO MEMORY SECTION — 73

P C — 74

EP 0 522 181 B1

## Fig.7A

(a) VERTICAL SYNC. SIGNAL VS

(b) HORIZONTAL SYNC. SIGNAL HS

(c) LINE CLK SIGNAL LCK

$T_v$

$(N2)$

$T_x$

## Fig.7B

(a) HORIZONTAL SYNC. SIGNAL HS

(b) VCO OUTPUT SIGNAL CK

$T_h$

$(N1)$

## Fig.7C

(a) HORIZONTAL SYNC. SIGNAL HS

(b) VCO OUTPUT SIGNAL CK

$T_i$

EP 0 522 181 B1

Fig.8B

Fig.8A